# FASCICULE DE BREVET EUROPEEN

(11) **EP 3 993 229 B1**
(45) Date de publication et mention de la délivrance du brevet: **27.05.2026**
(21) Numéro de dépôt: 21203895.4
(22) Date de dépôt: 21.10.2021
(51) Int. Cl.: H02K 1/28, H02K 9/06, H02K 15/03, H02K 1/27

(54) **ROTOR DE MACHINE ÉLECTRIQUE TOURNANTE**
ROTOR EINER UMLAUFENDEN ELEKTRISCHEN MASCHINE
ROTOR OF ROTATING ELECTRIC MACHINE

(30) Priorité: 29.10.2020 FR 2011093
(43) Date de publication de la demande: 04.05.2022
(73) Titulaire: Moteurs Leroy-Somer, 16915 Angouleme (FR)
(72) Inventeur: VOHLGEMUTH, Patrick, 16560 ANAIS (FR)
(74) Mandataire: Ipsilon

(56) Documents cités:
- EP-A1- 0 549 428
- WO-A1-2008/081684
- DE-A1- 2 641 536
- JP-A- 2016 037 376
- JP-U- S 622 362

## Description

### Domaine technique

La présente invention concerne les machines électriques tournantes et plus particulièrement les rotors de telles machines. L'invention s'intéresse en particulier aux rotors à aimants permanents.

L'invention porte plus particulièrement sur les machines synchrones ou asynchrones, motrices ou génératrices. Elle concerne notamment les alternateurs.

### Technique antérieure

Pour fixer les aimants permanents sur le reste du rotor, plusieurs techniques sont appliquées, telle que l'utilisation de colle, d'agrafes, de vis traversant les aimants, ou encore l'imprégnation de l'aimant sur une culasse après sa mise en place, notamment par remplissage des espaces inter-aimants.

Cependant, ces techniques présentent certains inconvénients. Leur mise en œuvre peut être délicate ou coûteuse.

L'emploi de colle, comme dans EP 2 462 202, peut nécessiter, en présence de solvants volatiles, de procéder dans des conditions contraignantes pour les opérateurs. La problématique est de maitriser la propreté et le dégraissage des pièces, les tolérances géométriques des pièces pour garantir l'épaisseur du film de colle, la composition des colles, les températures et le temps de polymérisation, notamment. De plus, la colle doit être choisie pour conserver sa fonction adhésive dans le temps, malgré les contraintes thermiques liées au fonctionnement de la machine, notamment la dilatation différentielle entre le matériau de la culasse et celui des aimants, et l'exposition à un environnement relativement agressif dans certaines applications. Enfin, il est nécessaire de prévoir un jeu entre les aimants et la culasse pour leur montage, ce qui peut entraîner un défaut de concentricité.

Si le collage est associé à un garnissage de résine, la problématique de composition, de température et de temps de polymérisation est aussi valable pour la résine.

En ce qui concerne l'imprégnation, il s'agit d'un procédé long, très coûteux et encombrant en termes de mise en œuvre, compte-tenu de la nécessité d'utiliser des bacs à vernis et des fours. De plus, cela impose une contrainte thermique liée à la démagnétisation des aimants et rend également la récupération des aimants impossible sans détérioration.

L'assemblage peut être réalisé par un système d'agrafes, comme par exemple dans FR 2 588 424, FR 2 676 871, EP 0 663 714, US 8 421 291, ou dans US 3 663 850. Les agrafes peuvent être libres, rivetées, vissées ou à clips. Elles sont placées dans les espaces inter-aimants, disposent d'une certaine élasticité, et agissent comme des ressorts qui séparent les aimants et les plaquent sur la culasse. Le procédé de mise en place des agrafes peut être complexe. De plus, les agrafes étant des éléments rapportés, elles représentent un coût structurel supplémentaire.

Les aimants peuvent en variante encore être traversés radialement par un ou plusieurs trous fraisés, la culasse étant pourvue de trous taraudés, et les aimants étant fixés dans la culasse par des vis. Ces perçages et taraudages représentent un coût supplémentaire. En outre, la présence des trous fraisés dans les aimants tend à réduire leur surface utile, et en conséquence pénalise la densité de puissance.

Une performance électromagnétique optimale est obtenue lorsqu'un aimant- qui présente en section transversale deux petits côtés opposés et deux grands côtés opposés - est en contact parfait sur un de ses deux grands côtés avec la culasse, le passage du flux magnétique des aimants vers la culasse étant maximisé.

Aussi, il existe un besoin pour minimiser le jeu entre les aimants et la culasse, afin ainsi d'éviter un entrefer du point de vue magnétique qui induit nécessairement des pertes dans les performances électromagnétiques de la machine. Un tel jeu est lié aux contraintes de fabrication qui ne permettent pas, pour des coûts raisonnables, de respecter des dimensions très précises dans le découpage de la culasse ou dans la conception des aimants. Un jeu peut également être dû au fait que, les aimants étant sensibles à la corrosion, il peut être nécessaire de les recouvrir d'un revêtement protecteur induisant également une incertitude sur leurs dimensions

Les documents EP0549428 A1, WO2008/081684 A1, DE2641536 A1, JP2016037376, JPS622362 U décrivent des rotors de machines électriques comprenant des culasses de rotor et des aimants permanents maintenus sur la culasse par coincement. à .

Il existe un besoin pour améliorer les performances magnétiques et réduire les coûts de fabrication et de montage des machines électriques tournantes.

Il existe ainsi un besoin pour améliorer encore la conception des rotors de machines électriques tournantes et remédier aux inconvénients des solutions actuelles, rappelés ci-dessus.

### Résumé de l'invention

L'invention a ainsi pour objet un rotor de machine électrique tournante, comportant une culasse et des aimants permanents maintenus sur la culasse par coincement entre la culasse et un entraîneur. Au moins un aimant permanent est en section longitudinale contenant l'axe de rotation du rotor, de forme générale trapézoïdale.

Le maintien des aimants permanents dans le rotor est assuré par leur pincement longitudinal, entre un retour ménagé dans l'une des extrémités de la culasse, et un second retour ménagé dans une extrémité de l'entraîneur. De façon à garantir un parfait plaquage des aimants sur la surface intérieure de la culasse, les faces des retours qui pincent les aimants, peuvent être en forme de tronc de cône, et les faces des aimants qui sont pincées, peuvent former des portions de tronc de cône complémentaires.

Par rapport au montage avec des vis qui traversent radialement les aimants, la totalité de la surface de ces derniers est en vis-à-vis du stator, et donc contribue à l'induction magnétique dans la machine, ce qui permet d'améliorer les performances électromagnétiques de celle-ci.

### Exposé de l'invention

La culasse peut être fixée à l'entraîneur par une ou plusieurs vis de pression. La ou les vis de pression peuvent être enfoncées dans l'entraîneur parallèlement à un axe de rotation du rotor.

Par rapport au collage, ce principe de montage est très simple, puisque la fixation ne nécessite que des opérations de vissage. De plus, dès le vissage terminé, le maintien des aimants est assuré, et le rotor est immédiatement disponible pour la suite du procédé de fabrication de la machine électrique tournante. Enfin, dans l'invention, l'accessibilité pour la manœuvre des vis de pression n'est pas limitée par le diamètre intérieur du rotor.

Au moins une des vis de pression peut comporter une tête venant en recouvrement de la culasse, notamment d'un petit côté de celle-ci, lorsque la culasse est observée en section longitudinale, contenant l'axe de rotation du rotor.

Les vis de pression peuvent comporter chacune une tête venant en recouvrement de la culasse, notamment d'un petit côté de celle-ci, lorsque la culasse est observée en section longitudinale, contenant l'axe de rotation du rotor.

Le recouvrement peut être partiel, étant par exemple compris entre 0,1 et 3 mm, voire entre 0,2 et 2 mm, mieux de l'ordre de 0,3 à 1 mm. Le couple de serrage de chaque vis peut être choisi de sorte que chaque vis exerce une charge longitudinale de 5000 N sur la culasse.

Le rotor peut par exemple comporter entre 1 et 12 vis, notamment entre 2 et 10 vis, par exemple entre 4 et 8 vis. Le rotor peut par exemple comporter 6 vis de fixation.

Le diamètre des vis peut être choisi de manière à assurer une pression suffisante pour le maintien de la culasse sur l'entraîneur.

Dans un mode de réalisation, la culasse peut être emmanchée à force dans l'entraîneur. Dans ce mode de réalisation, la culasse est maintenue dans l'entraîneur par serrage. A cet effet, l'entraîneur peut être légèrement chauffé, puis la culasse et l'entraîneur peuvent être maintenus sous pression pendant le refroidissement.

La culasse et l'entraîneur peuvent ménager un logement en forme de queue d'aronde annulaire, dans lequel sont insérés les aimants permanents. Ainsi, dans l'invention, les aimants permanents sont fixés sur une surface intérieure de la culasse du rotor, notamment un rotor extérieur, par pincement dans ledit logement en forme de queue d'aronde annulaire. Le fond de ce logement peut être défini par la culasse. Un premier côté annulaire du logement peut être défini également par la culasse, notamment par un rebord annulaire de celle-ci allant en s'élargissant en direction de l'entrefer, et comportant un bord oblique orienté vers l'intérieur du rotor. Un deuxième côté annulaire du logement peut être défini par l'entraîneur.

Dans un mode de réalisation, la culasse peut comporter un rebord annulaire allant en s'élargissant en direction de l'entrefer, et comportant un bord oblique orienté vers l'intérieur du rotor. Le rebord annulaire peut avoir une épaisseur, mesurée en section longitudinale perpendiculairement à l'axe de rotation du rotor, comprise entre 1 et 6 mm, voire entre 2 et 5 mm, mieux de l'ordre de 3 à 4 mm. Le bord oblique peut être incliné par rapport à axe perpendiculaire à un axe de rotation du rotor d'un angle compris entre 10 et 30°, mieux entre 12 et 25°, voire entre 14 et 20°, étant par exemple de l'ordre de 15°.

Dans un mode de réalisation, la culasse peut comporter à la base du bord oblique une gorge annulaire permettant de faciliter la fabrication de la culasse, notamment au niveau du raccordement du rebord annulaire de celle-ci au reste de la culasse. La présence de la gorge permet de minimiser localement l'effort radial appliqué aux aimants permanents, de façon à éviter des surcontraintes sur ceux-ci, ainsi que d'éviter la circulation du flux magnétique vers le rebord annulaire de la culasse, mais au contraire de favoriser sa circulation perpendiculairement à un axe de rotation du rotor.

Dans un mode de réalisation, la culasse peut comporter un chanfrein d'entrée dans l'entraîneur. Ce chanfrein permet de faciliter l'introduction de la culasse dans l'entraîneur. Il peut prendre la forme d'une découpe annulaire dans un angle de la culasse, lorsque celle-ci est observée en section longitudinale, contenant l'axe de rotation du rotor.

Le rotor peut comporter une rondelle de serrage disposée entre la culasse et l'entraîneur. La rondelle de serrage permet de favoriser le serrage entre la culasse et l'entraîneur, et notamment de s'assurer que l'aimant permanent n'est pas endommagé par le serrage. Elle peut être disposée entre un retour de l'entraîneur et les aimants permanents. La rondelle de serrage peut s'étendre dans un plan perpendiculaire à un axe de rotation du rotor. Elle peut être disposée à une extrémité axiale de la culasse, sur un petit côté de celle-ci, lorsque la culasse est observée en section longitudinale, contenant l'axe de rotation du rotor. La rondelle de serrage peut être disposée à l'opposée d'un rebord annulaire de la culasse.

La rondelle est de préférence mince, avec une faible dureté. Elle peut être réalisée par exemple en élastomère ou fibres. Son écrasement permet d'absorber les petites différences de longueur des aimants permanent du rotor. Ainsi, la pression exercée sur chacun des aimants est uniformisée, et les risques de casse d'aimants par surcontrainte en compression sont minimisés. L'ensemble constitue ainsi un assemblage par queue d'aronde annulaire à serrage maitrisé. Par rapport aux différents systèmes à agrafes, l'utilisation de pièces uniquement dédiées au maintien des aimants est très limitée. Seule la rondelle de compensation ne contribue qu'à cette unique fonction. Au sens de l'analyse fonctionnelle, cette limitation de pièces structurelles tend à augmenter le rendement fonctionnel de la conception.

La culasse peut présenter une forme cylindrique de révolution. La culasse peut comporter une surface radialement intérieure cylindrique de révolution et une surface radialement extérieure également cylindrique de révolution. Les deux surfaces cylindriques de révolution intérieure et extérieure peuvent être espacée d'une distance d comprise entre 5 et 25 mm, voire entre 6 et 20 mm, voire encore entre 7 et 15 mm, mieux de l'ordre de 8 à 10 mm. Le dimensionnement de cette distance d peut être choisi de manière à assurer le passage de la densité de flux électromagnétique. Elle peut comporter lorsque observée en section longitudinale, contenant l'axe de rotation du rotor, deux petits côtés opposés, l'un recouvert partiellement par la vis de pression, l'autre par la rondelle de serrage.

L'entraîneur peut comporter des ailettes de ventilation. Ces ailettes permettent de favoriser le refroidissement de l'entraîneur et donc du rotor. Les ailettes peuvent en particulier être disposées sur une surface extérieure de l'entraîneur. Elles peuvent chacune s'étendre généralement selon un plan, ledit plan pouvant contenir un axe de rotation du rotor.

Les ailettes peuvent avoir une extrémité qui fait saillie au-delà de l'entraîneur, les extrémités des ailettes étant reliées entre elles par un anneau. Cet anneau peut avantageusement servir d'interface de liaison avec une partie tournante du moteur d'entrainement, tel qu'un volant d'inertie de moteur thermique par exemple.

Le refroidissement du rotor permet d'éviter la démagnétisation des aimants permanents, qui peut se produire au-delà d'une certaine température. En effet, en fonctionnement, les aimants permanents sont le siège de pertes qui entrainent leur échauffement.

Dans un mode de réalisation de l'invention, la ventilation du rotor est intégrée à la partie tournante, mais il pourrait en être autrement, et le rotor pourrait par exemple être équipé d'un système de refroidissement, par exemple par circulation d'un fluide, liquide ou gaz, tel que de l'eau ou de l'huile par exemple.

L'entraîneur peut se dire en anglais « *driving ring* »*.*

L'entraineur peut être non magnétique, et il peut n'avoir un rôle que mécanique d'entraînement du rotor en rotation. Il peut par exemple être réalisé en aluminium. Au cours du fonctionnement du rotor, la culasse peut se dilater du fait de son échauffement dû à la circulation du flux magnétique. Sa dilatation peut en fonctionnement être compensée par le refroidissement obtenu grâce à l'entraîneur.

La culasse peut être magnétique. La culasse peut par exemple être réalisée en acier magnétique. Elle permet ainsi la circulation du flux magnétique entre les différents pôles du rotor.

Les aimants permanents peuvent être disposés en surface de la culasse. Dans ce cas, ils font directement face à l'entrefer. Les aimants permanents peuvent ne pas être enterrés ou encastrés dans la culasse. Les aimants peuvent présenter une forme cylindrique de révolution, avec une surface radialement intérieure cylindrique de révolution et une surface radialement extérieure également cylindrique de révolution. La surface radialement extérieure fait face à l'entrefer, et la surface radialement intérieur est en contact avec la culasse.

Les aimants permanents peuvent chacun comporter deux petits côtés qui viennent en rapprochement en direction de l'entrefer.

Les aimants permanent peuvent avoir une épaisseur, mesurée en section longitudinale perpendiculairement à l'axe de rotation du rotor, comprise entre 1 et 7 mm, voire entre 2 et 6 mm, mieux entre 3 et 5 mm, par exemple de l'ordre de 4 mm. Le rotor peut par exemple comporter 10 aimants.

On peut avoir une alternance de 2 fois 5 aimants de polarités opposées. Le nombre d'aimants du rotor peut correspondre au nombre de pôles du rotor, chaque aimant définissant un pôle du rotor. Le rotor peut comporter entre 2 et 24 pôles, par exemple entre 4 et 20 pôles, mieux entre 6 et 16 pôles, notamment 10 pôles.

Le rotor peut être extérieur. Le rotor peut ne pas être un rotor intérieur. En variante, le rotor pourrait être un rotor intérieur.

L'invention a encore pour objet une machine électrique tournante comportant un tel rotor. La machine peut comporter en outre un stator. Le rotor peut être extérieur, étant disposé autour d'un stator intérieur. La circulation du flux magnétique dans la machine entre le stator et le rotor peut être radiale. La circulation du flux peut ne pas être axiale. L'entrefer ménagé entre le stator et le rotor peut être de forme générale cylindrique. Le stator peut être bobiné sur dents.

La machine peut être un alternateur. La machine peut être par exemple une génératrice triphasée. Elle peut par exemple être utilisée dans un relais téléphonique ou pour l'éclairage. Elle peut avoir une puissance comprise entre 1 et 100 kW, mieux entre 2 et 80 kW, voire entre 10 et 50 kW, par exemple entre 12 et 20 kW.

L'invention a encore pour objet un procédé de fabrication d'un rotor de machine électrique tournante, notamment une machine telle que définie ci-dessus, dans lequel on vient maintenir des aimants permanents sur une culasse par coincement entre la culasse et un entraîneur. Au moins un aimant permanent est en section longitudinale contenant l'axe de rotation du rotor, de forme générale trapézoïdale.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] La figure 1 représente, en perspective, un rotor d'une machine électrique tournante selon l'invention.
[Fig 2] La figure 2 est une vue en perspective éclatée du rotor de la figure 1.
[Fig 3] La figure 3 est une vue de détail, en coupe longitudinale, du rotor des figures 1 et 2.
[Fig 4] La figure 4 est une vue en coupe longitudinale d'un aimant permanent du rotor des figures 1 à 3.

### Description détaillée

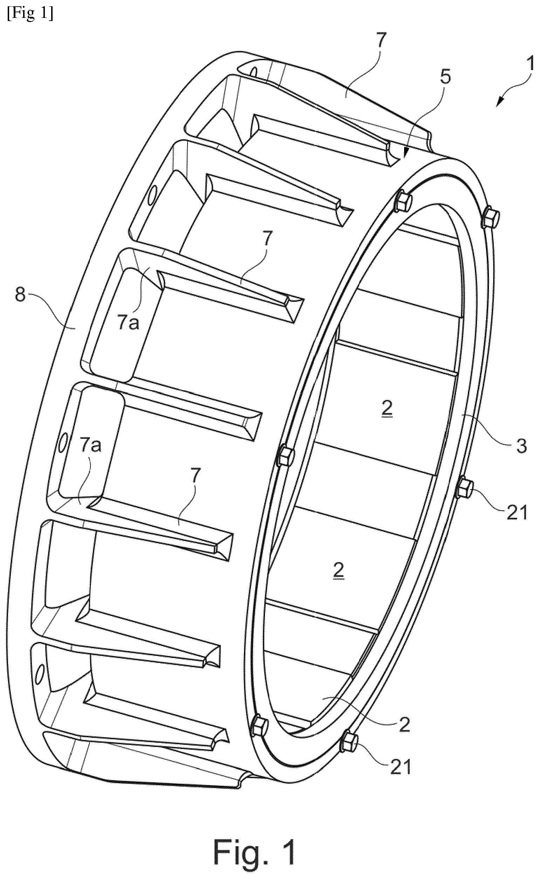

On a illustré aux figures 1 à 4 un rotor 1 conforme à l'invention, pour une machine électrique tournante à aimants permanents. Il s'agit d'un rotor extérieur, destiné à coopérer avec un stator intérieur non représenté.

Ce rotor 1 comporte des aimants permanents 2 et une culasse 3, en particulier réalisée en acier magnétique, de façon à conduire le flux magnétique des aimants permanents 2 d'un pôle du rotor à un autre pôle.

Les aimants permanents 2 sont maintenus sur la culasse 3 par coincement entre la culasse 3 et un entraîneur 5.

L'entraîneur 5 est disposé circonférentiellement autour de la culasse 3. Il comporte des ailettes de ventilation 7, qui permettent de favoriser le refroidissement de l'entraîneur et donc du rotor. Ces ailettes 7 sont disposées sur une surface extérieure de l'entraîneur 5. Elles s'étendent chacune généralement selon un plan contenant un axe de rotation X du rotor. Elles ont en outre chacune une extrémité 7a qui fait saillie au-delà de l'entraîneur, et qui sont reliées entre elles par un anneau 8.

La culasse 3 comporte un rebord annulaire 9 allant en s'élargissant en direction de l'entrefer, et comportant un bord oblique 10 orienté vers l'intérieur du rotor. Le rebord annulaire 9 a une épaisseur, mesurée en section longitudinale perpendiculairement à l'axe de rotation du rotor, qui est de l'ordre de 3 à 4 mm. Le bord oblique 10 est incliné par rapport à un axe perpendiculaire à l'axe de rotation X du rotor d'un angle α de l'ordre de 15°.

La culasse 3 et l'entraîneur 5 ménagent un logement en forme de queue d'aronde annulaire, dans lequel sont insérés les aimants permanents 2. Ceux-ci sont fixés sur une surface intérieure de la culasse du rotor 1, par pincement dans le logement en forme de queue d'aronde annulaire.

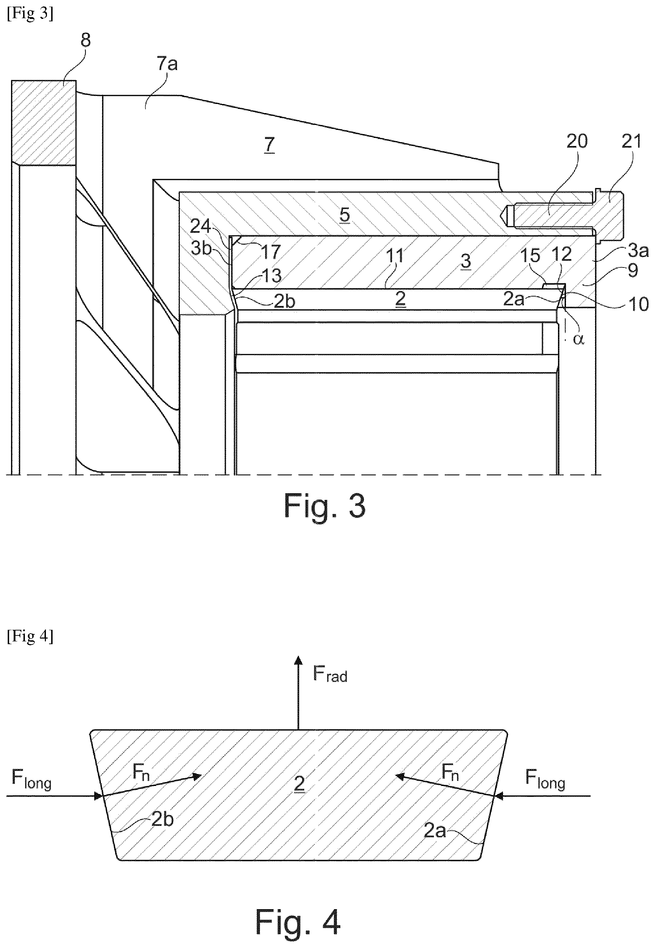

Le fond 11 du logement est défini par la culasse, comme bien visible sur la figure 3. Un premier côté 12 annulaire du logement est défini également par la culasse, à savoir par le bord oblique 10 du rebord annulaire 9 de celle-ci. Un deuxième côté annulaire 13 du logement est défini par l'entraîneur 5.

La culasse 3 comporte à la base du bord oblique 10 une gorge annulaire 15 permettant de faciliter la fabrication de la culasse, notamment au niveau du raccordement du rebord annulaire 9 de celle-ci au reste de la culasse.

La culasse 3 comporte enfin un chanfrein d'entrée 17 dans l'entraîneur 5. Ce chanfrein 17 permet de faciliter l'introduction de la culasse dans l'entraîneur 5. Il prend ici la forme d'une découpe annulaire dans un angle de la culasse, du côté du deuxième coté annulaire 13 du logement.

Les aimants permanents 2 sont, en section longitudinale contenant l'axe de rotation X du rotor, de forme générale trapézoïdale. Ils comportent chacun deux petits côtés 2a, 2b qui viennent en rapprochement en direction de l'entrefer. Les aimants permanents étant disposés en surface de la culasse, ils font directement face à l'entrefer.

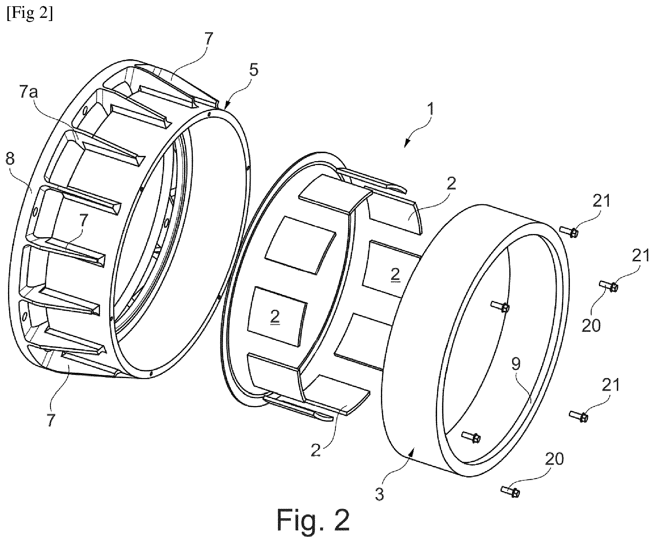

Les aimants permanents 2 présentent une forme cylindrique de révolution, comme visible sur la figure 2, avec une surface radialement intérieure cylindrique de révolution et une surface radialement extérieure également cylindrique de révolution. La surface radialement extérieure fait face à l'entrefer, et la surface radialement intérieur est en contact avec la culasse.

Les aimants permanent 2 ont une épaisseur e, mesurée en section longitudinale perpendiculairement à l'axe de rotation du rotor, de l'ordre de 4 mm. Le rotor peut par exemple comporter 10 aimants. On peut ainsi avoir une alternance de 2 fois 5 aimants de polarités opposées, le rotor comportant 10 pôles.

La culasse 3 est fixée à l'entraîneur par des vis de pression 20, lesquelles sont enfoncées dans l'entraîneur 5 parallèlement à l'axe de rotation X du rotor, comme visible sur la figure 3. Chaque vis 20 comporte une tête 21 venant en recouvrement de la culasse 3, sur un petit côté 3a de celle-ci, lorsque la culasse est observée en section longitudinale, contenant l'axe de rotation du rotor. Le recouvrement peut être partiel, étant de l'ordre de 0,3 à 1 mm. Le couple de serrage de chaque vis est choisi de sorte que chaque vis exerce une charge longitudinale de 5000 N sur la culasse 3. Le rotor comporte dans cet exemple 6 vis de fixation.

On a illustré à la figure 4 l'action *Flong* des vis 20, via la pente des petits côtés des aimants permanents, qui induit une poussée *Fn* de direction normale aux faces des petits côtés inclinés. Une composante *Frad* de cette poussée est donc de direction radiale, et tend à plaquer les aimants permanents sur la surface radialement intérieure de la culasse. Afin que le maintien des aimants soit assuré, il faut que cette force de précontrainte radiale *Frad* soit supérieure à la poussée centrifuge maximale que les aimants permanents exercent sur la culasse pendant la rotation du rotor.

Afin de favoriser le serrage entre la culasse 3 et l'entraîneur 5, et notamment de s'assurer que l'aimant permanent n'est pas endommagé par le serrage, le rotor comporte en outre une rondelle de serrage 24 disposée entre la culasse et l'entraîneur 5. La rondelle de serrage 24 s'étend dans un plan perpendiculaire à l'axe de rotation X du rotor, entre un retour de l'entraîneur 5 et les aimants permanents 2. Elle est disposée à une extrémité axiale de la culasse 3, sur un petit côté 3b de celle-ci, lorsque la culasse est observée en section longitudinale, contenant l'axe de rotation du rotor. La rondelle de serrage est ainsi disposée à l'opposée du rebord annulaire 9 de la culasse.

La culasse 3 présente une forme cylindrique de révolution. Elle comporte une surface radialement intérieure cylindrique de révolution et une surface radialement extérieure également cylindrique de révolution. Les deux surfaces cylindriques de révolution intérieure et extérieure sont espacées d'une distance d de l'ordre de 8 à 10 mm. Elle comporte lorsque observée en section longitudinale, contenant l'axe de rotation du rotor, deux petits côtés opposés 3a, 3b, l'un recouvert partiellement par les vis de pression 20, l'autre par la rondelle de serrage 24.

Bien entendu, l'invention n'est pas limitée à l'exemple qui vient d'être décrit. Par exemple, le rotor pourrait être dépourvu de vis de pression. La culasse pourrait être emmanchée à force dans l'entraîneur, étant maintenue dans l'entraîneur par serrage.

## Revendications

1. Rotor (1) de machine électrique tournante, comportant une culasse (3) et des aimants permanents (2) maintenus sur la culasse (3) par coincement entre la culasse et un entraîneur (5), **caractérisé par**:
au moins un aimant permanent (2) étant, en section longitudinale contenant l'axe de rotation (X) du rotor, de forme générale trapézoïdale,
la culasse (3) comportant un rebord annulaire (9) allant en s'élargissant en direction de l'entrefer, et comportant un bord oblique (10) orienté vers l'intérieur du rotor la culasse (3) comportant à la base du bord oblique (10) une gorge annulaire (15),
le maintien des aimants permanents dans le rotor étant assuré par pincement longitudinal entre ledit bord oblique (10) de la culasse, et un retour ménagé dans une extrémité de l'entraîneur.

2. Rotor selon la revendication précédente, la culasse (3) étant fixée à l'entraîneur (5) par une ou plusieurs vis de pression (20).

3. Rotor selon la revendication précédente, au moins une des vis de pression (20) comportant une tête (21) venant en recouvrement de la culasse, notamment d'un petit côté (3a) de celle-ci, lorsque la culasse est observée en section longitudinale, contenant l'axe de rotation (X) du rotor.

4. Rotor selon la revendication 1, la culasse (3) étant emmanchée à force dans l'entraîneur (5).

5. Rotor selon l'une quelconque des revendications précédentes, la culasse (3) et l'entraîneur (5) ménageant un logement en forme de queue d'aronde annulaire, dans lequel sont insérés les aimants permanents (2).

6. Rotor selon la revendication précédente, la gorge annulaire (15) étant située au niveau du raccordement du rebord annulaire (9) de celle-ci au reste de la culasse.

7. Rotor selon l'une quelconque des revendications précédentes, la culasse (3) comportant un chanfrein d'entrée (17) dans l'entraîneur (5).

8. Rotor selon l'une quelconque des revendications précédentes, comportant une rondelle de serrage (24) disposée entre la culasse (3) et l'entraîneur (5).

9. Rotor selon l'une quelconque des revendications précédentes, la culasse (3) présentant une forme cylindrique de révolution.

10. Rotor selon l'une quelconque des revendications précédentes, l'entraîneur (5) comportant des ailettes de ventilation (7).

11. Rotor selon l'une quelconque des revendications précédentes, la culasse (3) étant magnétique.

12. Rotor selon l'une quelconque des revendications précédentes, les aimants permanents (2) étant disposés en surface de la culasse (3).

13. Rotor selon l'une quelconque des revendications précédentes, le rotor (1) étant extérieur.

14. Machine électrique tournante, comportant un rotor (1) selon l'une quelconque des revendications précédentes, et un stator.

## Patentansprüche

1. Rotor (1) einer rotierenden elektrischen Maschine, umfassend ein Joch (3) und Permanentmagnete (2), die an dem Joch (3) durch Einklemmen zwischen dem Joch und einem Antriebsteil (5) gehalten werden, **dadurch gekennzeichnet, dass**:
mindestens ein Permanentmagnet (2) in dem die Rotationsachse (X) des Rotors enthaltenden Längsschnitt von trapezförmiger Grundform ist,
das Joch (3) eine ringförmigen Kante (9) umfasst, die sich in Richtung des Luftspalts erweitert, und einen schrägen Rand (10) umfasst, der zum Inneren des Rotors ausgerichtet ist, wobei das Joch (3) an der Basis des schrägen Rands (10) eine ringförmige Nut (15) umfasst;
das Halten der Permanentmagnete in dem Rotor durch Längsklemmung zwischen dem schrägen Rand (10) des Jochs und einem in einem Ende des Antriebsteils ausgebildeten Rücksprung gewährleistet wird.

2. Rotor nach dem vorhergehenden Anspruch, wobei das Joch (3) an dem Antriebsteil (5) durch eine oder mehrere Druckschrauben (20) befestigt ist.

3. Rotor nach dem vorhergehenden Anspruch wobei mindestens eine der Druckschrauben (20) einen Kopf (21) umfasst, der in Überlappung mit dem Joch, insbesondere mit einer kleinen Seite (3a) von diesem, gelangt, wenn das Joch in dem die Rotationsachse (X) des Rotors enthaltenden Längsschnitt betrachtet wird.

4. Rotor nach Anspruch 1, wobei das Joch (3) in den Antriebsteil (5) eingepresst ist.

5. Rotor nach einem der vorhergehenden Ansprüche, wobei das Joch (3) und das Antriebsteil (5) eine Aufnahme in Form eines ringförmigen Schwalbenschwanzes bilden, in welche die Permanentmagnete (2) eingesetzt sind.

6. Rotor nach dem vorhergehenden Anspruch, wobei die ringförmige Nut (15) an dem Übergang von ihrer ringförmigen Kante (9) zu dem Rest des Jochs gelegen ist.

7. Rotor nach einem der vorhergehenden Ansprüche, wobei das Joch (3) eine Einführfase (17) in das Antriebsteil (5) umfasst.

8. Rotor nach einem der vorhergehenden Ansprüche, umfassend eine Spannscheibe (24), die zwischen dem Joch (3) und dem Antriebsteil (5) angeordnet ist.

9. Rotor nach einem der vorhergehenden Ansprüche, wobei das Joch (3) eine kreiszylindrische Form aufweist.

10. Rotor nach einem der vorhergehenden Ansprüche, wobei das Antriebsteil (5) Lüftungsrippen (7) aufweist.

11. Rotor nach einem der vorhergehenden Ansprüche, wobei das Joch (3) magnetisch ist.

12. Rotor nach einem der vorhergehenden Ansprüche, wobei die Permanentmagnete (2) an der Oberfläche des Jochs (3) angeordnet sind.

13. Rotor nach einem der vorhergehenden Ansprüche, wobei der Rotor (1) außen ist.

14. Rotierende elektrische Maschine, die einen Rotor (1) nach einem der vorhergehenden Ansprüche und einen Stator umfasst.

## Claims

1. Rotor (1) of a rotating electrical machine, comprising a yoke (3) and permanent magnets (2) held on the yoke (3) by wedging between the yoke and a driver (5), **characterized by**:
at least one permanent magnet (2) being, in longitudinal section containing the axis of rotation (X) of the rotor, of generally trapezoidal form,
the yoke (3) comprising an annular rim (9) running widening towards the air gap, and comprising an oblique edge (10) oriented towards the interior of the rotor, the yoke (3) comprising, at the base of the oblique edge (10), an annular groove (15),
the holding of the permanent magnets in the rotor being ensured by longitudinal clamping between said oblique edge (10) of the yoke, and a return formed in one end of the driver.

2. Rotor according to the preceding claim, the yoke (3) being fixed to the driver (5) by one or more pressure screws (20).

3. Rotor according to the preceding claim, at least one of the pressure screws (20) comprising a head (21) overlapping the yoke, notably on a small side (3a) thereof, when the yoke is observed in longitudinal section, containing the axis of rotation (X) of the rotor.

4. Rotor according to Claim 1, the yoke (3) being force-fitted into the driver (5).

5. Rotor according to any one of the preceding claims, the yoke (3) and the driver (5) forming a housing in the form of an annular dovetail, in which the permanent magnets (2) are inserted.

6. Rotor according to the preceding claim, the annular groove (15) being situated at the connection of the annular rim (9) thereof to the rest of the yoke.

7. Rotor according to any one of the preceding claims, the yoke (3) comprising a bevel lead (17) for entry into the driver (5).

8. Rotor according to any one of the preceding claims, comprising a plain washer (24) positioned between the yoke (3) and the driver (5).

9. Rotor according to any one of the preceding claims, the yoke (3) having a cylindrical-of-revolution form.

10. Rotor according to any one of the preceding claims, the driver (5) comprising cooling fins (7).

11. Rotor according to any one of the preceding claims, the yoke (3) being magnetic.

12. Rotor according to any one of the preceding claims, the permanent magnets (2) being positioned on the surface of the yoke (3).

13. Rotor according to any one of the preceding claims, the rotor (1) being external.

14. Rotating electrical machine, comprising a rotor (1) according to any one of the preceding claims, and a stator.
